# EUROPÄISCHE PATENTSCHRIFT

(11) **EP 0 702 203 B1**
(45) Veröffentlichungstag und Bekanntmachung des Hinweises auf die Patenterteilung: **12.11.2003**
(21) Anmeldenummer: 95111286.1
(22) Anmeldetag: 19.07.1995
(51) Int. Cl.: G01B 7/00, G01D 5/14, G01D 5/245, G01B 7/02, G01D 5/16

(54) **Positionserfassung mit zwei nebeneinander angeordneten Magnetfeldsensoren**
Position recording with two magnetic field sensors arranged side by side
Enregistrement de position avec deux capteurs de champ magnétique arrangés côtè à côtè

(30) Priorität: 15.09.1994 DE 4432827
(43) Veröffentlichungstag der Anmeldung: 20.03.1996
(73) Patentinhaber: FESTO AG & Co, 73734 Esslingen (DE)
(72) Erfinder: Stoll, Kurt, Dr., D-73732 Esslingen (DE); Schade, Harald, D-73061 Ebersbach (DE)
(74) Vertreter: Abel, Martin, Dipl.-Ing.

(56) Entgegenhaltungen:
- EP-A- 0 491 621
- EP-A- 0 569 613
- DE-A- 3 245 357
- DE-A- 3 308 404
- DE-A- 4 037 545
- "Magnetfeldempfindliche Halbleiter-Positionssensor" ELEKTRONIK INDUSTRIE, Bd. 5, 1985, Seiten 1-6, XP002075960
- W.HEIDENREICH ; W.KUNY: "Magnetfeldempfindliche Halbleiter-Positionssensoren" ELEKTRONIK INDUSTRIE, Bd. 6, 1985, Seiten 112--118, XP002075959

## Beschreibung

Die Erfindung betrifft eine Einrichtung zur Bestimmung der Relativposition zwischen zwei relativ zueinander bewegbaren Körpern.

Bei einer aus der EP-A1-569 613 bekannten Einrichtung zur Positionsbestimmung ist ein einziger nockenartiger Indikator vorgesehen, der an einer von zwei Sensoreinheiten vorbeibewegt wird und dabei ein Sensorsignal erzeugt, während eine zweite Sensoreinheit ein kontinuierliches Signal erzeugt. Durch Differenzmessung der Sensorsignale wird ein einziges Sensorsignal während des Passierens des Indikators an der einen Sensoreinheit erzeugt.

Eine weitere Einrichtung zur Bestimmung einer Relativposition geht aus der Veröffentlichung "Sonderdruck aus elektronik Industrie", Heft 5/85 und 6/85, "Magnetfeldempfindliche Halbleiter-Positionssensoren", Seiten 1 bis 6, hervor. Diese bekannte Einrichtung verfügt über einen Sensor mit zwei Hall-Generatoren als Sensoreinheiten, die als ebenfalls Differentialsensor geschaltet sind. Ein in den Sensor integrierter Dauermagnet liefert ein Magnetfeld, das gleichzeitig beide Hall-Generatoren durchsetzt. Wird ein aus einem ferromagnetischen Material bestehender Indikator an den Sensoreinheiten vorbeibewegt, ändert sich das die Sensoreinheiten durchset, zende Magnetfeld, was sich in einem gewissen Ausgangssignal niederschlägt. Sind der Sensor und der Indikator an zwei relativ zueinander beweglichen Körpern befestigt, lässt sich auf diese Weise die Relativposition der beiden Körper zu einem bestimmten Zeitpunkt erfassen. Die Zuordnung zwischen dem Indikator und dem Sensor ist dabei so zu treffen, dass die Arbeitsrichtung mit der Basisrichtung zusammenfällt. Die Basisrichtung ist dabei diejenige Richtung, in der die beiden Sensoreinheiten aufeinanderfolgend angeordnet sind, und die Arbeitsrichtung ist die Richtung der Relativbewegung zwischen dem Indikator und dem Sensor.

Eine ähnliche Einrichtung geht auch aus der Veröffentlichung "SIEMENS", Datenbuch 1982/83, "Sensoren Magnetfeldhalbleiter Teil 1", Seiten 40 bis 44, hervor. Hier sind die Sensoreinheiten von zwei in einer Differentialschaltung zusammengefassten Feldplatten gebildet, und der Indikator ist ein Dauermagnetteil, dessen Magnetfeld beim Vorbeilaufen an dem Sensor nacheinander die beiden Sensoreinheiten durchsetzt, wobei wiederum die Magnetfeldänderung ein zur Positionsbestimmung verwertbares Ausgangssignal liefert.

Positionsbestimmungseinrichtungen kommen immer dann zur Anwendung, wenn es gilt, Arbeitsabläufe in Abhängigkeit von der Stellung bestimmter Bauteile durchzuführen. So werden beispielsweise in der Montage- und Handhabungstechnik pneumatisch betriebene Linear- oder Drehantriebe eingesetzt, um die erforderlichen Positionierungsaufgaben zu bewältigen. Dabei ist der Einsatz der oben beschriebenen Sensorik grundsätzlich möglich. Allerdings ist hierzu ein beträchtlicher Aufwand erforderlich, um die Vielzahl relevanter Positionen zu erfassen. Um beispielsweise nur zwei Axialpositionen eines Schlittens zu erfassen, werden bereits zwei Sensoren benötigt, um bei Signalabgabe konkret die momentane Position bestimmen zu können.

Es ist die Aufgabe der vorliegenden Erfindung, eine Einrichtung der eingangs genannten Art zu schaffen, die mit geringem Aufwand einen flexibleren und vielseitigeren Einsatz ermöglicht.

Diese Aufgabe wird erfindungsgemäß durch eine Einrichtung mit den Merkmalen des Anspruches 1 gelöst.

Die erfindungsgemäße Einrichtung erlaubt es, unter Verwendung eines einzigen Sensors mehrere Relativpositionen zwischen zwei Körpern derart zu erfassen, dass klar erkennbar ist, um welche der möglichen Relativpositionen es sich handelt. Es besteht beispielsweise die Möglichkeit, zwei Indikatoren derart anzuordnen, dass sie bei der Relativbewegung der beiden Körper über unterschiedliche der Sensoreinheiten des Sensors hinwegfahren, woraus unterschiedliche Ausgangssignale resultieren, anhand derer erkennbar ist, welcher der Indikatoren das Signal ausgelöst hat. Da die Indikatoren selbst relativ einfache Bauteile sind, lässt sich auf diese Weise ein äußerst kostengünstiges und gleichwohl flexibles Sensorsystem realisieren. Bei Bedarf ist zudem bei Verwendung einer entsprechenden Anzahl von Indikatoren gleichen Typs bzw. gleicher Anordnung der kostengünstige Aufbau eines inkrementalen Systems möglich.

In Abhängigkeit vom jeweiligen Überdeckungsgrad des Sensors durch die einzelnen Indikatoren ergeben sich zweckmäßigerweise unterschiedliche Ausgangssignale, anhand derer ein unmittelbarer Rückschluss dahingehend möglich ist, welcher Sensor das Ausgangssignal verursacht hat. Dies ermöglicht eine konkrete Positionsbestimmung.

Vorteilhafte Weiterbildungen der Erfindung gehen aus den Ungeransprüchen hervor.

Vorzugsweise handelt es sich bei den Sensoren um Halbleitersensoren, deren Sensoreinheiten einen Halbleiteraufbau haben. Dabei handelt es sich zweckmäßigerweise um sogenannte Hall-Generatoren oder Feldplatten. Auch die Verwendung magnetoresistiver Sensoreinheiten wäre denkbar.

Bei einer bevorzugten Ausgestaltung sind Indikatoren vorhanden, die in zwei Schaltpositionen angeordnet sind, so dass ein in der ersten Schaltposition befindlicher Indikator lediglich die erste Sensoreinheit und ein in der zweiten Schaltposition befindlicher Indikator lediglich die zweite Sensoreinheit überdecken kann. Die unterschiedliche Betätigungsart resultiert dann beispielsweise in einer positiven und einer negativen Ausgangsspannung, was sich beispielsweise im Rahmen einer Differentialschaltung der Sensoreinheiten realisieren läßt.

Ein erweitertes System sieht zusätzlich Indikatoren vor, die beim Passieren des Sensors die beiden Sensoreinheiten gleichzeitig und vorzugsweise vollständig überdecken, was wiederum ein abweichendes Ausgangssignal ergeben kann, aus dem sich die momentane Position des betreffenden Körpers feststellen läßt. Bei Bedarf läßt sich der mögliche Auswerteumfang noch vergrößern, indem weitere Indikatoren vorgesehen sind, deren Überdeckungsgrad bezüglich der Sensoreinheiten sich von den erläuterten Indikatoren unterscheidet. In diesem Zusammenhang ist darauf hinzuweisen, daß die geschilderte überdeckung nicht notwendigerweise ein physisches Abdecken erfordert, sondern auch die Fälle darunter zu verstehen sind, bei denen die Indikatoren abseits der Sensoreinheiten vorbeilaufen, gleichwohl jedoch mit ihrem Magnetfeld die Sensoreinheiten beeinflussen oder auf ein die Sensoreinheiten bereits durchsetzendes Magnetfeld einwirken.

Zweckmäßigerweise sind die Indikatoren verstellbar an dem sie tragenden Körper angeordnet, so daß flexible Einstellmöglichkeiten bestehen.

Die gewünschten Ausgangssignale werden zweckmäßigerweise von einer Ausgangsspannung gebildet, die aus der Differentialspannung zwischen zwei entsprechend miteinander verknüpften Sensoreinheiten abgeleitet ist. Diese Ausgangsspannung läßt sich bei einem Feldplattensensor beispielsweise sehr exakt über eine Brückenschaltung ermitteln, in die die Sensoreinheiten eingeschaltet sind.

Mit Hilfe der Positionsbestimmungseinrichtung läßt sich bei Bedarf eine Ablaufsteuerung verwirklichen, indem mehrere Indikatoren in Arbeitsrichtung aufeinanderfolgend in verschiedenen Abständen angeordnet werden, die den Sensor jeweils in gleicher Weise betätigen, wobei ein eine andere Schaltposition aufweisender Indikator als Referenzmarke zum Starten der Ablaufsteuerung herangezogen wird. Mit jedem der Indikatoren kann eine Funktion ausgelöst werden. Werden mehrere Indikatoren in gleicher Weise hintereinander montiert, lassen sich diese durch Zählen in einer Steuerung problemlos unterscheiden.

Durch Verwendung von mindestens drei Indikatortypen (ein "Indikatortyp" ist ein für eine bestimmte Schaltposition stehender Indikator) lassen sich auch Ablaufsteuerungen mit Vorwärts-Rückwärts-Erkennung verwirklichen. Sind z.B. drei Indikatortypen vorhanden, können diese in der Typenreihenfolge 1 - 2 - 3 - 1 - 2 - 3 - 1 . . . angeordnet werden, so daß auf Grund der vorwärts und rückwärts vorliegenden unterschiedlichen Reihenfolge stets eine eindeutige Aussage über die Bewegungsrichtung gemacht werden kann.

Um einen rationellen Einsatz von Indikatoren zu ermöglichen, empfiehlt es sich, Basiskörper mit identischen geometrischen Abmessungen bereitzustellen, in denen die verschiedenen Indikatortypen durch unterschiedliche Lokalisierung verkörpert sind. Dies gestattet es beispielsweise, alle Indikatoren unabhängig vom jeweiligen Indikatortyp an einer gemeinsamen Befestigungsnut oder -schiene anzubringen. Eine mögliche Verwirklichung besteht darin, zwei Arten von Basiskörpern bereitzustellen, von denen die eine Art durchweg aus ferritischem Material und die andere Art zur Hälfte aus ferritischem und zur anderen Hälfte aus austenitischem Material besteht, wobei der vollständig ferritische Basiskörper zum Zusammenwirken mit beiden Sensoreinheiten vorgesehen ist, während der andere Basiskörper je nach Einbaulage dazu dient, mit leglich nur der einen oder lediglich nur der anderen Sensoreinheit zusammenzuarbeiten.

Nachfolgend wird die Erfindung anhand der beiliegenden Zeichnung näher erläutert. In dieser zeigen:
- Fig. 1: ein Anwendungsbeispiel der erfindungsgemäßen Positionsbestimmungseinrichtung in schematischer Darstellung,
- Fig. 2: eine Positionsbestimmungseinrichtung bevorzugten Aufbaus, wie sie beispielsweise in dem Anwendungsfall gemäß Fig. 1 zum Einsatz kommt, ohne Darstellung der zugeordneten beweglichen Körper,
- Fig. 3: eine Seitenansicht der Anordnung aus Fig. 1 mit Blickrichtung gemäß Pfeil III in schematischer Darstellung,
- Fig. 4: eine Prinzipskizze des Sensoraufbaus mit angeschlossener Auswerteeinrichtung,
- Fig. 5, 6 und 7: die Positionsbestimmungseinrichtung unter Verwendung verschiedener Indikatortypen in Draufsicht gemäß Pfeil V aus Fig. 2,
- Fig. 8, 9 und 10: die sich bei den Einsatzfällen der Fig. 5 bis 7 ergebenden Auswertediagramme,
- Fig. 11: die Prinzipskizze eines Sensoraufbaus mit angeschlossener Auswerteeinrichtung zur Ermittlung der Auswertediagramme gemäß Fig. 8 bis 10 bei Verwendung von drei Indikatortypen und
- Fig. 12: eine zweckmäßige Bauform eines Indikators.

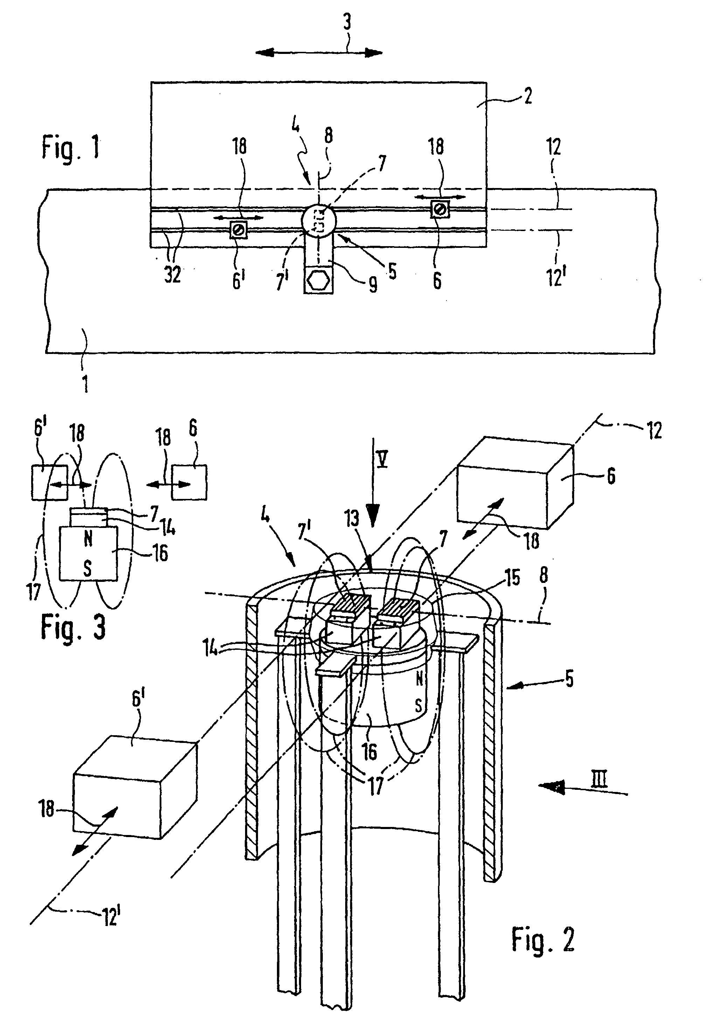

Aus Fig. 1 geht ein feststehender erster Körper 1 hervor, an dem ein schlittenartiger zweiter Körper 2 in einer durch Doppelpfeil 3 verdeutlichten Verlagerungsrichtung hin und her bewegbar geführt angeordnet ist. Die Bewegung des zweiten Körpers 2 wird durch eine nicht näher gezeigte Antriebseinrichtung hervorgerufen. An den beiden Körpern 1, 2 ist eine Positionsbestimmungseinrichtung 4 angeordnet, deren Aufbau im einzelnen aus Fig. 2 hervorgeht. Sie ermöglicht die Erfassung bestimmter Relativpositionen zwischen den beiden Körpern 1, 2.

Die Positionsbestimmungseinrichtung 4 umfaßt einen Sensor 5, der über einen Halter 9 an dem ersten Körper 1 befestigt ist. Ferner umfaßt die Positionsbestimmungseinrichtung 4 mehrere Indikatoren 6, 6', die mit dem Sensor 5 zusammenwirken und an dem zweiten Körper 2 angeordnet sind. Die Anordnung ist so getroffen, daß die Indikatoren 6, 6' bei der Verlagerung des zweiten Körpers 2 den Sensor 5 in unmittelbarer Nachbarschaft passieren.

Der beispielsgemäße Sensor 5 verfügt über zwei magnetfeldempfindliche Sensoreinheiten 7, 7'. Es handelt sich hier vorzugsweise um Halbleiter-Sensoreinheiten, die beim Ausführungsbeispiel von sogenannten Feldplatten gebildet sind. Alternativ könnte es sich auch um sogenannte Hall-Generatoren handeln. Denkbar wäre auch die Verwendung magnetores istiver Elemente. Der Aufbau und die Wirkungsweise magnetfeldempfindlicher Sensoreinheiten ist z. B. in dem Artikel "Magnetfeldempfindliche Halbleiter-Positionssensoren", Sonderdruck aus "elektronik industrie", Heft 5/85 und 6/85, Seiten 1 bis 6, oder in dem Buch "Sensoren Magnetfeldhalbleiter Teil 1", Datenbuch 1982/83, SIEMENS, Seiten 40 bis 44, erläutert, so daß sich an dieser Stelle nähere Ausführungen erübrigen.

Die beiden Sensoreinheiten 7, 7' liegen zweckmäßigerweise in einer gemeinsamen Ebene und sind nebeneinander angeordnet. Diese Richtung der Nebeneinander-Anordnung sei als Basisrichtung 8 bezeichnet, deren Verlauf in Fig. 1 und 2 durch eine strichpunktierte Linie angedeutet ist.

Der Sensor 5 und die Indikatoren 6, 6' sind mit Bezug zueinander derart angeordnet, daß die Indikatoren 6, 6' beim Bewegen des zweiten Körpers 2 an den beiden Sensoreinheiten 7, 7' berührungslos vorbeilaufen. Der Sensor 5 ist so positioniert, daß die Sensoreinheiten 7, 7' dem in Fig. 1 und 2 durch eine strichpunktierte Linie angedeuteten Verlagerungsweg 12, 12' der Indikatoren 6, 6' zugewandt sind. Im Betrieb laufen die Indikatoren 6, 6' somit mit Abstand vor der Vorderseite 13 des Sensors 5 vorbei, in deren Bereich sich die Sensoreinheiten 7, 7' befinden.

Der Aufbau des beispielsgemäßen Sensors 5 kann dem auf Seite 44 der erwähnten Veröffentlichung "Sensoren Magnetfeldhalbleiter Teil 1" entsprechen. Demnach handelt es sich bei den Sensoreinheiten 7, 7' um plattenförmige Elemente, deren Plattenebenen parallel zueinander verlaufen und vorzugsweise in einer gemeinsamen Ebene liegen. Der Verlagerungsweg 12, 12' erstreckt sich parallel zu dieser Ebene. Die beim Ausführungsbeispiel als Feldplatten ausgebildeten Sensoreinheiten 7, 7' sind jeweils auf eine isolierte Fläche eines aus Eisen bestehenden Polschuhs 14 aufgeklebt. Auf den dem Verlagerungsweg 12, 12' zugewandten Plattenflächen der aus Halbleitermaterial bestehenden Sensoreinheiten 7, 7' können Heicheisen-Polbleche aufgeklebt sein (nicht dargestellt), die die beiden Feldplattensysteme 7, 7' vor mechanischer Beschädigung schützen. Ferner kann eine jeweilige Sensoreinheit 7, 7' mit dem zugeordneten Polschuh 14 in eine magnetfelddurchlässige Umhüllung 15 eingebettet sein. Des weiteren sind diese Teile beim Ausführungsbeispiel auf einem Dauermagnetstück 16 mit zweckmäßigerweise rechtwinkelig zur Plattenebene ausgerichteter Polarisierung angebracht. Dieser Permanentmagnet verursacht ein in Fig. 2 strichpunktiert angedeutetes Magnetfeld 17, das die beiden Sensoreinheiten 7, 7' insbesondere im rechten Winkel zu ihren Plattenflächen durchsetzt. Dieses Magnetfeld 17 strahlt über die Vorderseite 13 des Sensors 5 hinaus.

Der Abstand des Sensors 5 von dem Verlagerungsweg 12, 12' ist derart gewählt, daß die Indikatoren 6, 6' beim Bewegen des zweiten Körpers 2 durch das Magnetfeld 17 hindurchlaufen. Die Bewegungsrichtungen der Indikatoren 6, 6', die als Arbeitsrichtungen 18 bezeichnet werden, sind in mehreren der Figuren durch Pfeile bzw. Doppelpfeile kenntlich gemacht. Sie verlaufen parallel zu der Verlagerungsrichtung 3.

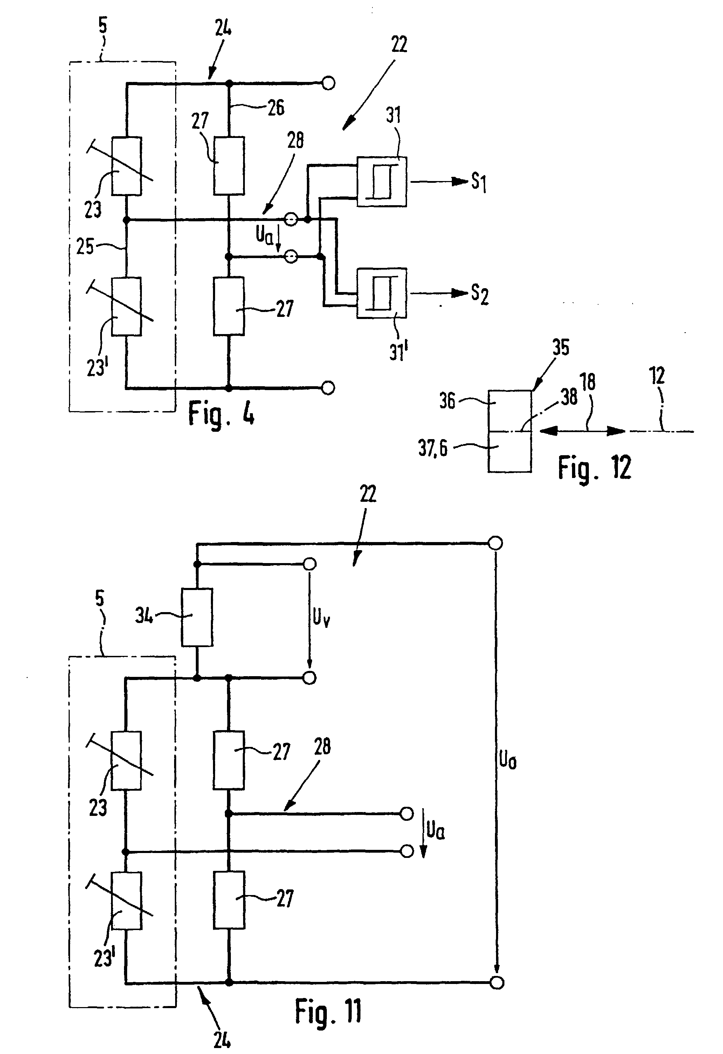

Die Indikatoren 6, 6' bestehen beim Ausführungsbeispiel aus einem ferromagnetischen Material und dabei vorzugsweise aus einfachem Stahl. Beim Durchlaufen des Magnetfeldes 17 verursachen sie eine Änderung desselben, woraus eine Widerstandsänderung der als Feldplatten ausgebildeten Sensoreinheiten 7, 7' resultiert. Aus dieser werden in einer noch zu beschreibenden Auswerteeinrichtung 22 Steuersignale S₁, S₂ abgeleitet (Fig. 4), die beliebig weiterverwertbar sind. Beispielsweise läßt sich damit die auf den zweiten Körper 2 einwirkende Antriebseinrichtung ansteuern, um somit in Abhängigkeit von bestimmten Positionen des zweiten Körpers 2 dessen Bewegungsabläufe zu steuern.

Ein besonderer Vorteil der Positionsbestimmungseinrichtung 4 resultiert daraus, daß der Sensor 5 mit Bezug zu den Indikatoren 6, 6' derart ausgerichtet ist, daß die Arbeitsrichtung 18 der Indikatoren 6, 6' quer zu der Basisrichtung 8 verläuft. Beispielsgemäß sind die beiden Richtungen 18, 8 rechtwinkelig zueinander angeordnet, das heißt, die Arbeitsrichtung 18 ist bezüglich der Basisrichtung 8 um 90° gedreht. Dies eröffnet äußerst flexible Positionserfassungmöglichkeiten, wobei jedem Steuersignal S₁, S₂ ein bestimmter Indikator und somit eine bestimmte Position des zweiten Körpers 2 relativ zu dem ersten Körper 1 zugeordnet werden kann.

Eine vorteilhafte Betriebsweise besteht darin, die beiden Sensoreinheiten 7, 7' in einer sogenannten Differentialschaltung zusammenzuschalten, so daß der Sensor 5 einen Differentialsensor bildet. In dem Schaltschema der Fig. 4 sind die beiden Sensoreinheiten 7, 7' durch ihren über die Indikatoren 6, 6' beeinflußbaren Feldplattenwiderstand 23, 23' abgebildet. Sie sind in eine Brückenschaltung 24 integriert, wobei sie vorliegend die beiden in Reihe geschalteten Brückenglieder des ersten Brücken-Längszweiges 25 bilden. Der parallelgeschaltete zweite Brücken-Längszweig 26 enthält als Brückenglieder zwei in Reihe geschaltete Festwiderstände 27. Die am Brücken-Querzweig 28 abgreifbare Spannung bildet ein Ausgangssignal Uₐ, das bei der Erzeugung der Steuersignale S₁, S₂ verwendet wird.

Bei dem Ausführungsbeispiel gemäß Fig. 1 bis 3 sind die beiden Indikatoren 6, 6' nun derart angeordnet, daß sie beim Vorbeilaufen an dem Sensor 5 jeweils nur das durch eine Sensoreinheit 7, 7' hindurchgehende Magnetfeld beeinflussen. Der eine Indikator 6 wirkt somit nur auf die erste Sensoreinheit 7, während der andere Indikator 6' ausschließlich auf die zweite Sensoreinheit 7' einwirkt. Dadurch ändert sich im einen Falle nur der erste Festplattenwiderstand 23 und im anderen Falle nur der zweite Festplattenwiderstand 23'. Infolge der Differentialschaltung ergibt sich somit als Ausgangssignal Uₐ einmal eine positive und das andere Mal eine negative Spannung. Abgesehen von der eigentlichen Sensorbetätigung läßt sich daraus vorteilhafterweise zweifelsfrei auch derjenige Indikator mit Bestimmtheit ersehen, der die Sensorbetätigung ausgelöst hat. Zweckmäßigerweise wird das Ausgangssignal Uₐ zwei Komparatoren 31, 31' mit unterschiedlicher Schwellenspannung zugeführt, so daß in Abhängigkeit von dem erregenden Indikator 6, 6' ein Steuersignal S₁ oder S₂ entsteht.

Ersichtlich läßt sich also durch den voreingestellten überdeckungsgrad, das heißt den Grad der Überdeckung der beiden Sensoreinheiten 7, 7' durch einen sie passierenden Indikator 6, 6', ein für einen jeweiligen überdeckungsgrad charakteristisches Signal erzeugen, so daß man mit nur einem Sensor und mehreren, in verschiedenen Positionen angeordneten Indikatoren vielfältige und flexible Positionsbestimmungsmöglichkeiten hat.

Beim Ausführungsbeispiel werden die Sensoreinheiten 7, 7' beim Vorbeilaufen der Indikatoren 6, 6' von diesen zeitweilig zu einem bestimmten Grad körperlich abgedeckt. Unter dem Begriff "Überdeckung" werden vorliegend alle Zustände verstanden, bei denen ein am Sensor 5 vorbeilaufender Indikator 6, 6' das Magnetfeld 17 in relevantem Maße beeinflußt, wobei ein jeweiliger Indikator 6, 6' durchaus auch seitlich neben den Sensoreinheiten 7, 7' vorbeilaufen kann.

Um unterschiedliche Oberdeckungsgrade zu erzielen, werden die Indikatoren 6, 6' in entsprechenden Schaltpositionen am zweiten Körper 2 angeordnet. Man erkennt aus Fig. 1, daß die Indikatoren 6, 6' derart am zweiten Körper 2 angeordnet sind, daß ihre Verlagerungswege 12, 12' parallel und im Abstand nebeneinander verlaufen und dabei jeweils rechtwinkelig zu der Basisrichtung 8 ausgerichtet sind. Ein jeweiliger Verlagerungsweg 12, 12' läuft hier unmittelbar vor einer jeweiligen Sensoreinheit 7, 7' vorbei.

Zur besseren Unterscheidung seien vorliegend die einen unterschiedlichen Überdeckungsgrad aufweisenden Indikatoren als "Indikatortypen" bezeichnet. Beim Ausführungsbeispiel gemäß Fig. 1 bis 3 sind somit zwei Indikatortypen vorhanden. Prinzipiell wäre es natürlich möglich, mehrere Indikatoren vom gleichen Indikatortyp vorzusehen und diese entlang eines Verlagerungsweges mit Abstand zueinander anzuordnen.

Vorzugsweise sind die Indikatoren 6, 6' in der zugeordneten Arbeitsrichtung 18 bezüglich des sie tragenden zweiten Körpers 2 verstellbar. Dies erlaubt eine variable Vorgabe der gewünschten Schaltzeit. Gemäß Fig. 1 sind an dem zweiten Körper 2 zwei parallel und mit Abstand zueinander und in Verlagerungsrichtung 3 verlaufende Befestigungsnuten oder -rippen 32 vorgesehen, an denen jeweils mindestens ein Indikator 6, 6' derart gelagert ist, daß er sich in Längsrichtung verstellen und in jeder gewünschten Position unbewegbar festlegen läßt.

Es versteht sich, daß die Befestigungsnuten bzw. -rippen 32 auch einen gebogenen Verlauf haben können, dies insbesondere bei der Detektion zweier relativ zueinander eine Schwenk- oder Drehbewegung ausführender Körper.

Der Sensor 5 ist beim Ausführungsbeispiel unbewegbar an dem ersten Körper angeordnet. Allerdings besteht auch hier die Möglichkeit, eine verstellbare Montage vorzusehen.

Während beim Ausführungsbeispiel gemäß Fig. 1 bis 3 der Sensor 5 am feststehenden Körper und die Indikatoren am sich bewegenden Körper angeordnet sind, kann diese Anordnung bei Bedarf auch umgekehrt erfolgen.

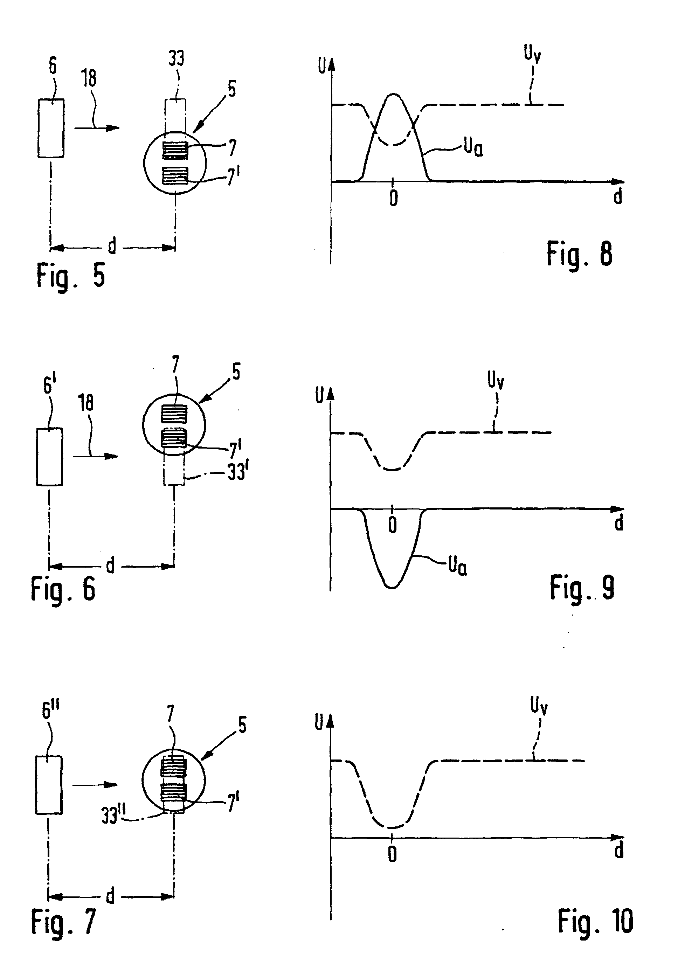

Die Fig. 5 bis 11 zeigen eine Anordnung, bei der ein Sensor 5 mit drei Indikatoren 6, 6', 6'' unterschiedlichen Indikatortyps zusammenarbeitet. Diese drei Indikatoren 6, 6', 6'' überdecken die Sensoreinheiten 7, 7' beim Vorbeilaufen am Sensor 5 in unterschiedlichem Maße. Die strichpunktiert angedeuteten Stellungen 33, 33', 33'' in Fig. 5, 6 und 7 zeigen einen jeweiligen Indikator 6, 6', 6'' in der dem Sensor 5 jeweils momentan gegenüberliegenden Position, die als Betätigungsposition bezeichnet sei. Mit "d" ist der Abstand zwischen einem sich an den Sensor 5 annähernden Indikator 6, 6', 6'' und seiner Betätigungsposition 33, 33', 33'' bezeichnet.

Die Fig. 11 zeigt wiederum den mit einer Auswerteeinrichtung 22 verknüpften Sensor 5. Abgesehen von einem Vorwiderstand 44, der in Reihe mit der Brückenschaltung 24 liegt, entspricht der Aufbau der in Fig. 4 gezeigten Auswerteschaltung. Zusätzlich zu dem Ausgangssignal Uₐ wird hier der Spannungsabfall U_{V} an dem Vorwiderstand 34 erfaßt und geht in die Ermittlung des betreffenden Steuersignals mit ein.

Der erste Indikator 6 gemäß Fig. 5 ist derart angeordnet, daß er in der Betätigungsposition 33 die erste Sensoreinheit 7 insbesondere vollständig abdeckt. Die zweite Sensoreinrichtung 7' bleibt unabgedeckt. Auf Grund der Differentialschaltung ergibt sich für das Ausgangssignal Uₐ die in dem Diagramm der Fig. 8 dargestellte Kurve mit einem positiven Spannungsausschlag beim Durchlaufen der Betätigungsposition 33.

Der zweite Indikator 6' ist derart angeordnet, daß er in der Betätigungsposition 33' nur die zweite Sensoreinheit 7' insbesondere vollständig abdeckt, während hier die erste Sensoreinheit 7 unbeeinflußt bleibt. Als Resultat ergibt sich für das Ausgangssignal Uₐ die in Fig. 9 in durchgezogenen Linien gezeigte Kurve mit einem negativen Spannungsausschlag beim Durchlaufen der Schaltposition.

Vergleichbar der in Fig. 4 beschriebenen Art und Weise lassen sich die Ausgangssignale Uₐ in der Auswerteeinrichtung auswerten. Es genügen hier beispielsweise zwei Komparatoren mit zum einen einer positiven und zum anderen einer negativen Schwellenspannung.

In den Diagrammen gemäß Fig. 8 und 9 ist gestrichelt auch der Spannungsabfall U_{V} aufgetragen, der für die Ermittlung der ersten und zweiten Betätigungsposition 33, 33' jedoch nicht notwendigerweise zu verwerten ist. Er wird beispielsgemäß zur Detektion der dritten Betätigungsposition 33'' verwendet, die dadurch gekennzeichnet ist, daß der zweite Indikator 6'' beide Sensoreinheiten 7, 7' gleichzeitig vorzugsweise vollständig abdeckt. Bei idealer exakter Ausrichtung der Sensoreinheiten 7, 7' wird sich hier auf Grund des Differentialprinzips kaum ein Spannungsausschlag als Ausgangssignal Uₐ ergeben. Da beide Sensoreinheiten 7, 7' abgedeckt sind, vergrößert sich jedoch der Widerstand in dem die Sensoreinheiten 7, 7' enthaltenden ersten Brücken-Längszweig 25, so daß der Spannungsabfall U_{V} an dem Vorwiderstand 34 im Vergleich zu den Betätigungspositionen 33, 33' geringer ist. Dies ist in der Verlaufskurve des Spannungsabfalls U_{V} der Fig. 10 wiedergegeben. Mittels eines geeigneten Komparators läßt sich hiermit auch die dritte Betätigungsposition 33'' zuordnungsrichtig detektieren.

Ersichtlich lassen sich in die Positionsbestimmungseinrichtung bei Bedarf noch weitere Indikatortypen integrieren, die sich von den bisher geschilderten durch den Grad der Überdeckung der Sensoreinheiten 7, 7' in der Betätigungsposition unterscheiden.

Anstelle lediglich zweier Sensoreinheiten 7, 7' wäre es auch denkbar, den Sensor 5 mit mehr als zwei Sensoreinheiten zu bestücken.

Die Anordnung und Auswertung der Positionsbestimmungseinrichtung bei mit Hall-Generatoren oder magnetoresistiven Elementen ausgestatteten Sensoren ist mit der geschilderten vergleichbar. Hier empfiehlt es sich allerdings, einen jeweiligen Indikator als Permanentmagnet auszubilden, dessen Magnetfeld beim Vorbeistreichen am Sensor 5 auf die Sensoreinheiten einwirkt, so daß diese einem sich ändernden Einfluß eines Magnetfelds ausgesetzt sind.

Bei entsprechend unterschiedlicher Ausgestaltung der Indikatoren unterschiedlichen Indikatortyps wäre es ohne weiteres möglich, nur eine einzige Befestigungsnut oder -rippe 32 vorzusehen, auf denen alle Indikatoren angeordnet sind. Zugunsten einer einheitlichen und rationellen Fertigung ist allerdings eine einheitliche äußere geometrische Gestaltung auch unterschiedlicher Indikatortypen anzustreben. Hierzu empfiehlt es sich, die Indikatoren als bestimmten Bestandteil eines einheitliche Außenabmessungen aufweisenden Basiskörpers 35 vorzusehen, wie es in Fig. 12 angedeutet ist. Der Basiskörper 35 setzt sich hier aus zwei nebeneinanderliegenden Abschnitten 36, 37 zusammen, von denen der eine Abschnitt 37 den Indikator 6 bildet. Dieser Basiskörper 35 kann in der in Fig. 7 erläuterten Art und Weise über einen Sensor 5 hinwegbewegt werden, so daß beide Sensoreinheiten 7, 7' gleichzeitig überdeckt werden. Die erzielte Wirkung ist allerdings diejenige der Fig. 6, da nur der als Indikator wirkende Abschnitt 37 eine Einflußnahme auf das Magnetfeld vornimmt. Eine derartige Einflußnahme wird durch den verbleibenden Abschnitt 36 nicht oder nur in geringem Maße ausgeübt, da er aus einem ein Magnetfeld nicht oder nur unwesentlich beeinflussenden Material besteht. Denkbar wäre es natürlich auch, den Basiskörper in mehrere Materialabschnitte mit unterschiedlicher Permeabilität zu unterteilen, wobei dann von Fall zu Fall festgelegt werden kann, welcher Abschnitt als Indikator herangezogen werden soll. So könnte ein Basiskörper beispielsweise in zwei Hälften unterteilt sein, wovon die eine austenitische und die andere ferritische Eigenschaften aufweist. Eine derartige Unterteilung ist in Fig. 1 strichpunktiert bei 38 angedeutet.

Der Basiskörper 35 kann ein mehrteiliger Körper sein, wobei die einzelnen Körperabschnitte aus separaten Materialteilen bestehen, die zusammengesetzt wurden, um den Basiskörper 35 zu bilden.

Lediglich durch eine um 180° geänderte Einbaulage läßt sich mit einem derartigen Basiskörper 35 wahlweise ein erster Indikator 6 oder ein zweiter Indikator 6' gemäß den Fig. 5 und 6 verwirklichen.

Werden mehrere Indikatoren eines bestimmten Indikatortyps in Arbeitsrichtung 18 hintereinander in verschiedenen Abständen montiert und ein Indikator eines weiteren Indikatortyps als Referenzmarke genommen, kann mit einer entsprechenden Anordnung eine Ablaufsteuerung erstellt werden, wobei jeder Indikator für das Auslösen einer bestimmten Funktion steht. Indikatoren gleichen Typs können hier durch einen überlagerten Zählvorgang voneinander unterscheidbar gemacht werden.

Um eine Ablaufsteuerung zu verwirklichen, die eine Erkennung der Bewegungsrichtung ermöglicht, also eine sogenannte Vorwärts-Rückwärts-Erkennung, sollten wenigstens drei Indikatortypen vorhanden sein. Werden diese in einer Typenreihenfolge 1 - 2 - 3 - 1 - 2 - 3 - 1 ... angeordnet, so kann über die Bewegungsrichtung des Sensors bzw. der Indikatoren auf Grund der immer unterschiedlichen benachbarten Indikatoren eine eindeutige Aussage gemacht werden.

Ein jeweiliger Indikator kann ein am zugeordneten Körper angebrachtes Zusatzteil sein, beispielsweise ein nockenoder klotzartiges Teil, wie in Fig. 1 und 2 gezeigt. Darüber hinaus könnten die Indikatoren auch unmittelbar von einem Bestandteil des in seiner Bewegung zu steuernden Körpers gebildet sein, beispielsweise die Zähne eines Zahnrades.

Besonders vorteilhaft läßt sich die Positionsbestimmungseinrichtung im Zusammenhang mit Linear-, Schwenk- und Drehantrieben einsetzen. Der die Arbeitsrichtungen 18 bestimmende Verlagerungsweg 12, 12' muß daher nicht notwendigerweise linear sein, sondern kann insbesondere auch eine Kreisbogenform haben. Man könnte an einem im Betrieb sich drehenden Teil in Umfangsrichtung versetzt mehrere Indikatoren anbringen, die bei der Rotationsbewegung an einem Sensor vorbeilaufen, der am feststehenden Teil angebracht ist.

Die erfindungsgemäße Positionsbestimmungseinrichtung läßt sich äußerst flexibel einsetzen und ermöglicht die relativ einfache Lösung auch komplexer Automatisierungsprobleme.

## Patentansprüche

1. Einrichtung zur Bestimmung der Relativposition zwischen zwei relativ zueinander bewegbaren Körpern (1, 2), mit einem an dem ersten Körper (1) vorgesehenen Sensor (5), der wenigstens zwei magnetfeldempfindliche Sensoreinheiten (7, 7') aufweist, die in einer Basisrichtung (8) nebeneinander angeordnet sind, und mit mehreren Indikatoren (6, 6', 6''), die derart an dem zweiten Körper (2) vorgesehen sind, dass der Sensor (5) und die Indikatoren (6, 6', 6'') bei einer Relativbewegung der beiden Körper (1, 2) in einer quer zur Basisrichtung verlaufenden Arbeitsrichtung (18) berührungslos aneinander vorbeibewegbar sind, wobei der Sensor (5) während der Vorbeibewegung jeweils eines der Indikatoren (6, 6', 6'') unter dem sich ändernden Einfluss eines Magnetfeldes (17) steht und die in unterschiedlichen Schaltpositionen entlang der Arbeitsrichtung (18) mit Abstand zueinander angeordneten Indikatoren (6, 6', 6") an den Sensoreinheiten (7, 7') mit unterschiedlichem Überdeckungsgrad vorbeistreichen, wobei nach dem Vorbeistreichen eines der Indikatoren (6, 6', 6") an den Sensoreinheiten (7, 7') bis zum Vorbeistreichen des nächsten Indikators ein weiterer Schaltzustand vorliegt, in dem keiner der Indikatoren die Sensoreinheiten (7, 7') überdeckt.

2. Einrichtung nach Anspruch 1, **dadurch gekennzeichnet, dass** die Sensoreinheiten (7, 7') einen Halbleiteraufbau besitzen.

3. Einrichtung nach Anspruch 1 oder 2, **dadurch gekennzeichnet, dass** die Sensoreinheiten (7, 7') von Hall-Generatoren gebildet sind.

4. Einrichtung nach Anspruch 1 oder 2, **dadurch gekennzeichnet, dass** die Sensoreinheiten (7, 7') von Feldplatten gebildet sind.

5. Einrichtung nach Anspruch 1 oder 2, **dadurch gekennzeichnet, dass** die Sensoreinheiten (7, 7') von magnetoresistiven Elementen gebildet sind.

6. Einrichtung nach einem der Ansprüche 1 bis 5, **dadurch gekennzeichnet, dass** die Indikatoren (6, 6', 6'') bei plattenförmigen Sensoreinheiten (7, 7') gegenüberliegend den Plattenflächen vorbeibewegt werden.

7. Einrichtung nach einem der Ansprüche 1 bis 6, **dadurch gekennzeichnet, dass** die Arbeitsrichtung (18) und die Basisrichtung (8) rechtwinkelig zueinander verlaufen.

8. Einrichtung nach einem der Ansprüche 1 bis 7, **dadurch gekennzeichnet, dass** die Sensoreinheiten (7, 7') in einer gemeinsamen Ebene angeordnet sind, die parallel zu der Arbeitsrichtung (18) verläuft.

9. Einrichtung nach einem der Ansprüche 1 bis 8, **dadurch gekennzeichnet, dass** der Sensor (5) als Differetialsensor aufgebaut ist.

10. Einrichtung nach einem der vorhergehenden Ansprüche, **dadurch gekennzeichnet, dass** mindestens ein erster Indikator (6) vorhanden ist, der bei der Vorbeibewegung am Sensor (5) lediglich eine erste (7) der vorhandenen Sensoreinheiten zumindest teilweise überdeckt, und dass mindestens ein weiterer Indikator (6') vorhanden ist, der bei der Vorbeibewegung am Sensor (5) lediglich eine andere zweite Sensoreinheit (7') oder gleichzeitig die beiden Sensoreinheiten (7, 7') zumindest teilweise überdeckt.

11. Einrichtung nach einem der vorhergehenden Ansprüche, **dadurch gekennzeichnet, dass** der Sensor (5) und/oder der mindestens eine Indikator (6, 6', 6'') in Arbeitsrichtung (18) verstellbar am zugeordneten Körper (1, 2) angeordnet ist.

12. Einrichtung nach einem der vorhergehenden Ansprüche, **dadurch gekennzeichnet, dass** der Indikator (6, 6', 6'') ein Dauermagnetteil ist, welches das den Sensor (5) beeinflussende Magnetfeld (17) liefert.

13. Einrichtung nach einem der vorhergehenden Ansprüche, **dadurch gekennzeichnet, dass** der Indikator (6, 6', 6") ein ferromagnetisches Teil ist, wobei das den Sensor (5) beeinflussende Magnetfeld (17) von einem am Sensor (5) vorgesehenen Magneten (16) geliefert wird.

14. Einrichtung nach einem der vorhergehenden Ansprüche, **gekennzeichnet durch** eine Auswerteeinrichtung (22), die in Abhängigkeit eines seinerseits vom Überdeckungsgrad der vorhandenen Sensoreinheiten (7, 7') abhängigen Ausgangssignals (Uₐ) ein bestimmtes Steuersignal (S₁, S₂) liefert.

15. Einrichtung nach Anspruch 14, **dadurch gekennzeichnet, dass** die Sensoreinheiten (7. 7') in den Längszweig (25) einer Brückenschaltung (24) eingeschaltet sind, wobei die am Querzweig (28) der Brückenschaltung (24) jeweils anliegende Spannung das Ausgangssignal (Uₐ) liefert.

16. Einrichtung nach Anspruch 15, **dadurch gekennzeichnet, dass** der Brückenschaltung (24) ein Vorwiderstand (34) vorgeschaltet ist, dessen Spannungsabfall (Uᵥ) bei der Ermittlung wenigstens eines Steuersignals verarbeitet wird.

17. Einrichtung nach Anspruch 15 oder 16, **dadurch gekennzeichnet, dass** ein positives und ein negatives SpannungsAusgangssignal (Uₐ) die zumindest teilweise Überdeckung von lediglich einer Sensoreinheit (7, 7') angibt, während die zumindest teilweise Überdeckung mehrerer Sensoreinheiten (7, 7') unter Berücksichtigung des geänderten Spannungsabfalles (Uᵥ) des Vorwiderstandes (34) ermittelt wird.

18. Einrichtung nach einem der vorhergehenden Ansprüche, **dadurch gekennzeichnet, dass** ein jeweiliger Indikator (6, 6', 6") von einem vorbestimmten Abschnitt (37) eines Basiskörpers (35) gebildet ist und sich insbesondere durch eine im Vergleich zum verbleibenden Abschnitt (36) des Basiskörpers (35) andersartige Materialbeschaffenheit auszeichnet.

## Claims

1. Device for determining the relative position between two bodies (1, 2) movable relative to one another, with a sensor (5) provided on the first body (1) with at least two magnetic-field-sensitive sensor units (7, 7'), arranged next to one another in a base direction (8) and with several indicators (6, 6' 6") provided on the second body (2) in such a way that, during a relative movement of the two bodies (1, 2), the sensor (5) and the indicators (6, 6' 6") may be moved past one another in an operating direction (18) at right-angles to the base direction, wherein the sensor (5) during the passing movement of each of the indicators (6, 6' 6") is under the changing influence of a magnetic field (17), and the indicators (6, 6' 6") spaced apart in different switching positions along the operating direction (18) brush past the sensor units (7, 7') with varying coverage, wherein after one of the indicators (6, 6' 6") has brushed past the sensor units (7, 7') until the the next indicator brushes past there is a further switching condition in which none of the indicators covers the sensor units (7, 7').

2. Device according to claim 1, **characterised in that** the sensor units (7, 7') have a semiconductor structure.

3. Device according to claim 1 or 2, **characterised in that** the sensor units (7,7') are formed by Hall generators.

4. Device according to claim 1 or 2, **characterised in that** the sensor units (7, 7') are formed by magneto resistors.

5. Device according to claim 1 or 2, **characterised in that** the sensor units (7, 7') are formed by magneto-resistive elements.

6. Device according to any of claims 1 to 5, **characterised in that** the indicators (6, 6' 6"), in the case of plate-shaped sensor units (7, 7'), are moved past opposite the plate surfaces.

7. Device according to any of claims 1 to 6, **characterised in that** the operating direction (18) and the base direction (8) run at right-angles to one another.

8. Device according to any of claims 1 to 7, **characterised in that** the sensor units (7, 7') are arranged in a common plane running parallel to the operating direction (18).

9. Device according to any of claims 1 to 8, **characterised in that** the sensor (5) is designed as a differential sensor.

10. Device according to any of the preceding claims, **characterised in that** there is at least one first indicator (6) which, on moving past the sensor (5), covers only a first (7) of the available sensor units at least partially, and that there is at least one further indicator (6') which, on moving past the sensor (5), covers only another second sensor unit (7') or the two sensor units (7, 7') simultaneously at least partially.

11. Device according to any of the preceding claims, **characterised in that** the sensor (5) and/or the one or more indicators (6, 6' 6") are arranged on the assigned body (1,2) so as to be adjustable in the operating direction (18).

12. Device according to any of the preceding claims, **characterised in that** the indicator (6,6' 6") is a permanent magnet providing the magnetic field (17) which influences the sensor (5).

13. Device according to any of the preceding claims, **characterised in that** the indicator (6, 6' 6") is a ferro-magnetic part, wherein the magnetic field (17) influencing the sensor (5) is supplied by a magnet (16) provided on the sensor (5).

14. Device according to any of the preceding claims, **characterised by** an analyser unit (22) which, depending on an output signal (Uₐ) which in turn is dependent on the degree of coverage of the available sensor units (7, 7), supplies a specific control signal (S₁, S₂).

15. Device according to claim 14, **characterised in that** the sensor units (7, 7') are inserted in the longitudinal branch (25) of a bridge connection (24), with the respective voltage applied at the cross branch (28) of the bridge connection (24) supplying the output signal (Uₐ).

16. Device according to claim 15, **characterised in that** a series resistor (34), the voltage drop (Uᵥ) of which processes one or more of the control signals during determination, is inserted before the bridge connection (24).

17. Device according to claim 15 or 16, **characterised in that** a positive and a negative voltage output signal (Uₐ) indicate the at least partial coverage of only one sensor unit (7, 7'), while the at least partial coverage of several sensor units (7, 7') is determined with allowance for the changed voltage drop (Uᵥ) of the series resistor (34).

18. Device according to any of the preceding claims, **characterised in that** each indicator (6, 6' 6") is formed by a predetermined section (37) of a base body (35) and is distinguished by a material property differing in comparison with the remaining section (36) of the base body (35).

## Revendications

1. Dispositif pour déterminer la position relative entre deux corps (1, 2) déplaçables l'un par rapport à l'autre, comportant un capteur (5) prévu sur le premier corps (1), lequel comporte au moins deux unités de capteur (7, 7') réagissant au champ magnétique qui sont disposés côte à côte dans une direction de base (8), et comportant plusieurs indicateurs (6, 6', 6") qui sont prévus sur le deuxième corps (2) de manière que le capteur (5) et les indicateurs (6, 6', 6") puissent être déplacés les uns devant les autres sans contact en cas de déplacement relatif des deux corps (1, 2) dans une direction de travail (18) s'étendant transversalement à la direction de base, le capteur (5) se trouvant sous l'influence variable d'un champ magnétique (17) pendant que l'un des indicateurs (6, 6', 6") se déplace devant lui, et les indicateurs (6, 6', 6") disposés à distance les uns des autres dans différentes positions de commande, passant devant les unités de capteurs (7, 7') avec un degré de recouvrement différent, un autre état de commande existant après passage de l'un des indicateurs (6, 6', 6") devant les unités de capteurs (7, 7') jusqu'au passage de l'indicateur suivant, dans lequel aucun des indicateurs ne recouvre les unités de capteurs (7, 7').

2. Dispositif selon la revendication 1, **caractérisé en ce que** les unités de capteurs (7, 7') présentent une construction à semi-conducteurs.

3. Dispositif selon la revendication 1 ou 2, **caractérisé en ce que** les unités de capteurs (7, 7') sont formées par des générateurs de Hall.

4. Dispositif selon la revendication 1 ou 2, **caractérisé en ce que** les unités de capteurs (7, 7') sont formées par des plaques de champ.

5. Dispositif selon la revendication 1 ou 2, **caractérisé en ce que** les unités de capteurs (7, 7') sont formées par des éléments magnéto-résistants.

6. Dispositif selon l'une des revendications 1 à 5, **caractérisé en ce que** dans le cas où les unités de capteurs (7, 7') sont en forme de plaque, les indicateurs (6, 6', 6") sont déplacés devant les surfaces des plaques, en face de celles-ci.

7. Dispositif selon l'une des revendications 1 à 6, **caractérisé en ce que** la direction de travail (18) et la direction de base (8) s'étendent perpendiculairement l'une à l'autre.

8. Dispositif selon l'une des revendications 1 à 7, **caractérisé en ce que** les unités de capteurs (7, 7') sont disposés dans un plan commun qui s'étend parallèlement à la direction de travail (18).

9. Dispositif selon l'une des revendications 1 à 8, **caractérisé en ce que** le capteur (5) est construit en tant que capteur différentiel.

10. Dispositif selon l'une des revendications précédentes, **caractérisé en ce qu'**au moins un premier indicateur (6) est prévu qui en passant devant le capteur (5), recouvre au moins en partie seulement une première (7) des unités de capteurs prévues, et **en ce qu'**il est prévu au moins un autre indicateur (6') qui en passant devant le capteur (5) recouvre au moins partiellement seulement une autre unité de capteurs (7') ou en même temps les deux unités de capteurs (7, 7').

11. Dispositif selon l'une des revendications précédentes, **caractérisé en ce que** le capteur (5) et/ou le ou les indicateurs (6, 6', 6") sont disposés sur le corps (1, 2) associé, de manière déplaçable dans la direction de travail (18).

12. Dispositif selon l'une des revendications précédentes, **caractérisé en ce que** l'indicateur (6, 6', 6") est un élément d'aimant permanent qui fournit le champ magnétique (17) influençant le capteur (5).

13. Dispositif selon l'une des revendications précédentes, **caractérisé en ce que** l'indicateur (6, 6', 6") est un élément ferromagnétique, le champ magnétique (17) influençant le capteur (5) étant fourni par un aimant (16) prévu sur le capteur (5).

14. Dispositif selon l'une des revendications précédentes, **caractérisé par** un dispositif d'exploitation (22) qui fournit une signal de commande (S₁, S₂) déterminé en fonction d'un signal de sortie (Uₐ) dépendant de son côté du degré de recouvrement des unités de capteurs (7, 7') prévues.

15. Dispositif selon la revendication 14, **caractérisé en ce que** les unités de capteurs (7, 7') sont montées dans la branche longitudinale (25) d'un circuit en pont (24), la tension s'appliquant sur la branche transversale (28) du circuit en pont (24) fournissant le signal de sortie (Uₐ).

16. Dispositif selon la revendication 15, **caractérisé en ce qu'**en amont du circuit en pont (24) est couplée une résistance série (34) dont la chute de tension (Uᵥ) est traitée pour la détermination d'au moins un signal de commande.

17. Dispositif selon la revendication 15 ou 16, **caractérisé en ce qu'**un signal de sortie de tension positif et un signal de sortie de tension négatif (U) indiquent le recouvrement au moins partiel de seulement une unité de capteurs (7, 7'), tandis que le recouvrement au moins partiel de plusieurs unités de capteurs (7, 7') est déterminé en tenant compte de la chute de tension (Uᵥ) modifiée de la résistance série (34).

18. Dispositif selon l'une des revendications précédentes, **caractérisé en ce que** chaque indicateur (6, 6', 6") est formé par un tronçon (37) prédéterminé d'un corps de base (35) et se caractérise en particulier par une nature de matériau d'un autre type par comparaison au tronçon (36) restant du corps de base (35).
